Europäisches Patentamt

European Patent Office

Office européen des brevets

(11) Publication number: **0 431 810 A1**

# EUROPEAN PATENT APPLICATION

(21) Application number: 90312822.1

(51) Int. Cl.⁵: **B65D 71/14**

(22) Date of filing: 26.11.90

(30) Priority: 06.12.89 US 446993

(43) Date of publication of application:
**12.06.91 Bulletin 91/24**

(84) Designated Contracting States:
**BE DE FR GB**

(71) Applicant: **EVEREADY BATTERY COMPANY, INC.**
**Checkerboard Square**
**St. Louis Missouri 63164(US)**

(72) Inventor: **Worley. Larry W.**
**5888 Denise Drive**
**North Ridgeville Ohio 44039(US)**

(74) Representative: **Lord, Hilton David et al**
**Marks & Clerk 57-60 Lincoln's Inn Fields**
**London WC2A 3LS(GB)**

(54) Battery package.

(57) The present invention relates to a pack(10), of dry cell batteries(14), wherein the batteries are wrapped in shrink-wrap material, preferably covering the terminals, characterised in that the wrap further comprises a tear strip (30), the strip having an end (32) accessible to a user and which, on pulling, is adapted to cause a tear in the wrap (40), allowing the batteries to be removed, such a pack being rigid, spacially economical, and easy to open.

EP 0 431 810 A1

## BATTERY PACKAGE

The present invention relates to packaging and more particularly to packages for dry cell batteries.

Dry cell batteries are marketed in a variety of different sizes. Cylindrical batteries, for example, are sold in "AAA", "AA", "C" and "D" sizes. Nine volt dry cell batteries may be sold in a rectangular shape.

Various packages have been used for merchandising dry cell batteries, and it will be appreciated that it is normally necessary to tailor such packaging according to individual requirements. If sold in bulk, they may be packaged loose in a single box, but are often sold in sets of two, four, six or eight, for example, in blister packages.

A blister package generally comprises a cardboard sheet or backing and a relatively rigid plastic casing which retains the batteries on the sheet. The cardboard sheet is suitably formed with an aperture at a header portion thereof which permits the package to be suspended from an elongated display rod on a rack, for example.

Dry cell batteries have also been sold in shrink wrap packages. Such packages use heat shrunk thermoplastic film which may be joined to a header board. Examples of prior packages may be found in U.S. Patent Nos. 3 424 306, 3 863 837, 4 166 532, and 4 747 491.

These and other prior approaches have presented certain inherent problems both to the consumer and to the retailer. The packages have required excessive space to store and to display the batteries. Generally, the dry cell batteries have not been conveniently packaged and hence sold loose in bulk, and the consumer prevented from obtaining cost savings. Prior packages have also been difficult to open, resulting in further inconvenience to the consumer. A need, therefore, exists for a battery package which provides convenience to the consumer, uses a minimum of space and which can be economically mass produced.

In a first aspect of the present invention, there is provided a pack of dry cell batteries, wherein the batteries are wrapped in shrink-wrap material, preferably covering the terminals, characterised in that the wrap further comprises a tear strip, the strip having an end accessible to a user and which, on pulling, is adapted to cause a tear in the wrap, allowing the batteries to be removed.

By 'shrink-wrap material' is meant any material which can be caused to shrink or contract in one or more dimensions when in situ, with minimal, or preferably, no adverse effect on the batteries. In particular, materials which shrink on exposure to heat are preferred, and examples of these are well known in the art. Generally, shrinkage will be in all dimensions, but the overall effect will be of two dimensions, as the wrap preferably comprises a film.

The tear strip may be of any suitable material, and may be integral with the wrap. However, it is preferred that the strip is formed of a material that is stronger than the wrap, so that the user may be sure that the wrap will tear and the strip remain intact.

The strip may suitably be of a tough and resilient plastics material, or may comprise a length of associated fibres, for example. Such fibres may generally be of glass or plastic, but it is preferred that they are monofilaments, for strength. All that is necessary is that, when the strip is pulled, a tear, or rupture, in the wrap occurs.

It is possible to provide a weakened section in the wrap where the strip will first act. This may not always be desirable, as a robust pack is generally preferable, and such may come apart if there is a weakened seam. Thus, a frangible seam may be provided, but it is preferred, if such is to be used, to only weaken the wrap at the point of first action. More preferred is to weaken the wrap slightly away from the point of first action, but along the tear line, so that there is no particularly weak point, but a firm pull on the strip will tear the wrap, aided by the slightly internal frangible portion.

The strip is preferably located inside the wrap, so that pulling will pull the strip through the wrap. However, it is possible for the strip to be located between two or more layers of wrap, so that the strip is only pulled through one or more outer layers. In such an instance, it may also be desirable to attach the strip to any inside layer, so that the inside layer is pulled off, or to provide a further inner tear strip. If a weak inner layer or film is provided, no other tear means may be required.

The rupture caused by the strip need not necessarily tear the wrap totally across the pack. It may only be necessary to provide a small rupture which can then easily be enlarged. However, it is generally preferred that the rupture is formed substantially all of the way across the packs for ease of access to the batteries.

To be accessible, the end of the strip may protrude for ease of gripping from the wrap. It is also possible for the end to be located under a flap which can be lifted to reveal the end, for example. The flap may be integral with the wrap, or may be secured thereon. It is also possible for a further means to be provided to grant access to the end of the strip. Such means may include a further tab or strip which, when pulled, allows access to the end of the tear strip. Such a tab or strip may be so adapted as to come away after revealing the end without being able to exert any significant force on the end, so as not to rupture the wrap without exertion of force directly on the strip by the user.

The strip may also be coloured, for ease of detection, while the wrap may be transparent to allow sight of the batteries, although any such scheme is not critical to the invention. However, it is preferred that the package provide some means of identifying where the end of the strip lies.

The wrap may be made of any suitable material, and may be made from a sheet welded or glued together to form a tube, sleeve or sock (tube closed at one end). The strip may optionally be located inside the resulting seam, especially where the seam provides a line of weakness, although such may not always be preferable.

The sleeve will generally be located over the batteries and shrunk into place around the batteries, and should cover the terminals. The strip may be located inside the sleeve before positioning the strip over the batteries, or may be positioned on the batteries before postioning of the wrap. In either case, the strip may be loosely positioned, or secured in place prior to shrinking the sleeve.

Where a sleeve is used, it may be left open at the ends, generally provided that the ends protrude beyond the batteries so that shrinking causes constriction of the opening or openings to retain the batteries. It is also possible that the ends could be sealed together, to prevent attack by moisture, for example. In such an instance, it may be advantageous to provide a sealed inner film, with the strip protruding the outer wrap so that any moisture penetrating through the access of the strip still cannot reach the batteries. Alternatively, any hole through which the strip protrudes may be plugged with wax, for example.

It is generally preferred that the end of the strip extends through an opening left by the shrunken sleeve, so that no special opening needs to be made. It may be advantageous to have the strip extending through the pack and from both openings of a sleeve, thereby providing the option as to which end to pull to release the batteries. Such an option may also provide the choice as to how much of the pack to open, and the choice of ends may also release different numbers, or even types, of batteries, particularly where the strip is not completely removed.

It is also possible that the wrap comprises two or more of the strips, which may either provide mutual 'failsafe' functions, or perform different functions, such as releasing different quantities or varieties of batteries. It is also possible to have both ends of a strip protruding from a wrap, other than from the open ends of a tube or sleeve.

The batteries to be packed will generally be of the same type, for ease of packing and because customers will usually only require one type of battery in a specific quantity. However, it may be desirable to provide variety packs, and such is within the scope of the invention.

It will be appreciated that any number of layers of shrink wraps with tear strips according to the present invention may be employed for any package. However, the it is generally preferred that multiple layers are used when several packs are combined into a larger pack. For example, a number of pairs of batteries may be packed in accordance with the present invention, and then these may be combined into a larger pack according to the present invention. If desired, this larger pack could then be further combined into a yet larger pack, and so on.

Thus, the above-mentioned needs are substantially fulfilled. Essentially, in a preferred embodiment, the package incorporates a heat shrinkable tube or sleeve having open ends. A plurality of batteries are positioned within the sleeve which is shrunk around the batteries to form a relatively rigid package. A tear strip or length of tape is affixed to an undersurface of the tube. The tear strip includes an end which extends into one of the open ends of the tube. The tube covers the battery terminals.

In narrower aspects of the invention, a plurality of the individually packaged sets of batteries may be arranged in back-to-back relationship and positioned within a larger, elongated outer tube or sleeve. The tube is heat shrunk around the assembled pairs of batteries to form a rigid convenient, attractive and sturdy package. A non-perforated tear strip is positioned on an undersurface of the tube along the centre line of the overall package. The tear strip may be pulled from one end of the package towards the opposite end. The consumer may, therefore, pull the tear strip only part of the way back so that individual sets of batteries are released while the remaining sets are securely retained in the package.

It is preferred that the tear strips be formed from a plastic material which has a strength greater than that of the wrap and that non-perforated strips be employed. Perforating the film might weaken the physical integrity of the package. Such a package may possibly not reliably enclose large size standard alkaline batteries such as C or D size batteries. The package should not be disposed to tearing or ripping during rough handling by the retailer and/or the consumer.

The package in accordance with the present invention generally defines a relatively rigid unit. The heat shrunk film securely retains the batteries and forms a package which takes up a minimum of space. The consumer readily obtains the advantages of bulk purchase while retaining the convenience of dispensing cells in, for example, pairs when they are needed.

At present, it is preferred that the heat shrinkable film used to form the sleeve is a polyvinyl chloride resin. A typical film material formulation is as follows:

| Material | Percentage |
|---|---|
| PVC resin | 88% |
| Heat stabiliser (Cadmium, metallic soap systems) | 2-3% |
| Impack modifier (MBS rubber) | 2-5% |
| Processing aids (fatty acid esters) | 1% |

One such film may be obtained from CMS Gilbreth Packaging Systems of Trevose, Pennsylvania. Other commercially available shrink wrap films could also be used.

In an alternative aspect, there is provided a package for a plurality of generally dry cell batteries, the package comprising;

a heat shrinkable open ended sleeve dimensioned to receive the batteries in tandem, side-by-side relationship, the sleeve covering terminals of the batteries and shrink wrapping the batteries into a rigid package, preferably with portions of the battery labels showing through the open ends; and a tear strip affixed to an inner surface of the sleeve, the strip extending between ends of the sleeve with a portion extending into one of the open ends.

A number of preferred embodiments follows.

The heat shrinkable sleeve is preferably a PVC resin film. The package advantageously further comprises a plurality of heat shrinkable open sleeves each receiving a pair of batteries in tandem, side-by-side relationship, with the sleeves arranged in back-to-back relationship to form a plurality of sets of batteries forming two rows along an elongate axis. Each of the sleeves preferably includes a tear strip affixed to an undersurface thereof.

Alternatively, there is provided a package as defined above further comprising:

an elongate outer sleeve of a heat shrinkable film, the outer sleeve having a longitudinal axis extending generally along the elongate axis, the outer sleeve having open ends and being shrunk around the sets of batteries to retain the individual sets in a rigid package.

In the package, each of the sleeves of the sets may have an axis extending through the open ends perpendicular to the longitudinal axis of the outer sleeve. Such a package preferably includes an elongated outer tear strip secured to an undersurface of the outer sleeve and extending into one of the open ends.

There is also provided a battery package comprising:

a plurality of individual batteries separated into a plurality of battery sets;

a plurality of inner tubes, each inner tube being heat shrunk around one of the battery sets for, individually wrapped sets, the sets arranged in back-to-back, abutting relationship to form a generally rectangular grouping;

an outer tube heat shrunk around the grouping of individually wrapped sets, the outer tube having a pair of open ends; and

a tear strip attached to an inner surface of the outer tube, the tear strip including and exposed end. Such a pack preferably further includes a plurality of individual tear strips each secured to an undersurface on one of the inner tubes.

The terminals of the batteries of each set are preferably covered and the open ends of the inner tubes expose portions of the sides of the batteries, the inner tubes each having an axis extending through the open ends. The outer tube preferably has a longitudinal axis which is generally perpendicular to the axes of the inner tubes.

The present invention conveniently and attractively packages individual batteries in sets for bulk sales. The heat shrinkable sleeves or tubes may be preprinted or left clear. The tear strips permit easy access to the individual batteries. The retailer may store and/or display batteries using the absolute minimum of space.

The present invention will now be illustrated in more detail with reference to accompanying drawings, in which:

Fig. 1 is a perspective view of a battery package in accordance with the present invention;

Fig. 2 is an end, perspective view of the battery package of Fig.1;

Fig. 3 is an exploded view showing a method of use of the package; and

Fig. 4 is a perspective view showing the opening of an individual set of batteries.

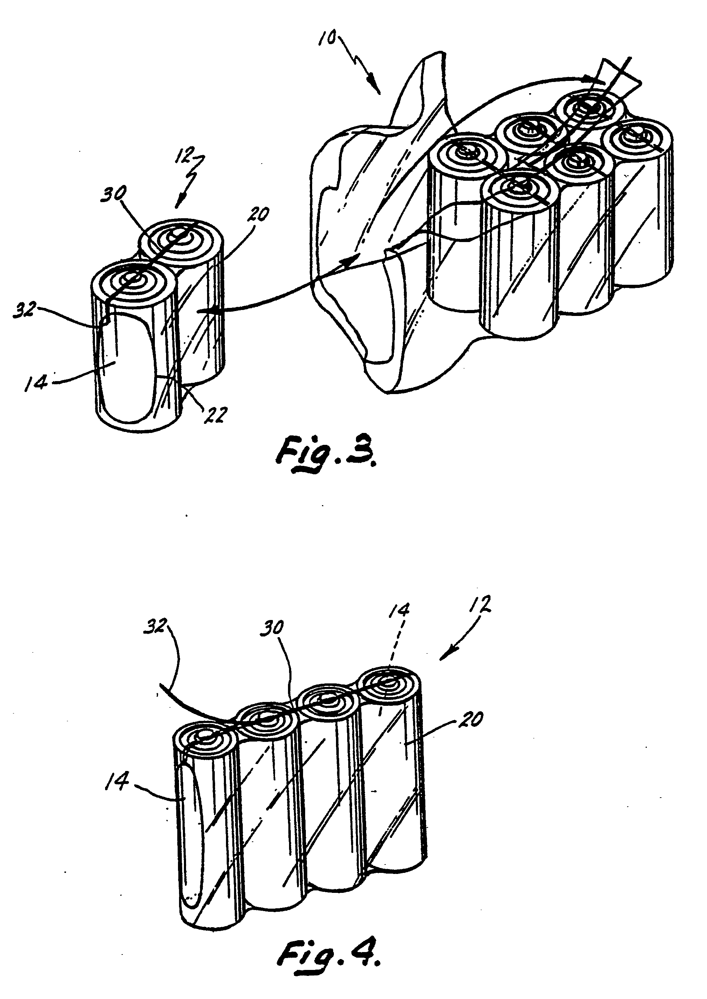

A preferred embodiment of a battery package in accordance with the present invention is illustrated in the drawings and generally designated by the numeral 10. Package 10 includes a plurality of individual sets 12 of dry cell batteries 14. The battery sets are arranged in a back-to-back relationship to form a pair of rows 16, 18 of batteries 14. The package employs a "package within a package" concept. As seen in Fig. 3, batteries 14 of each individual set 12 are individually packaged within a film tube or sleeve 20. In forming the set 12, tube or sleeve 20 is formed from a heat shrinkable film by joining edges of a sheet of film. A pair of dry cells 14 are positioned within the tube or sleeve 20 in a tandem, side-by-side relationship. Tube 20 includes open ends 22. The batteries are oriented so that the sleeve covers the terminals and a portion of the cell's labels or sides may be seen through the open end of the heat shrunk tubing. When heat is supplied to the tubing, it shrinks around the cells and creates a rigid battery set or inner package.

Easy opening of the individual set or package 12 is achieved with a tear strip or tape 30. Strip 30 extends between open ends 22 of tube 20. Preferably tear strip 30 is a length of tape having an adhesive applied to one side thereof. The adhesive secures the tape to the undersurface of the tube 20. An end portion 32' extends into at least one of the open ends 22. End portion 32 may be conveniently grasped by the consumer to tear open the shrink wrap package. As shown in Fig. 4, sleeve 20 may be used to retain four dry cells 14 in a single rigid package. Generally, four of the AA size, four of the AAA size or four of the nine volt batteries could be conveniently retained in a single set. It is presently preferred that only two of the C and D size batteries be packed in a set.

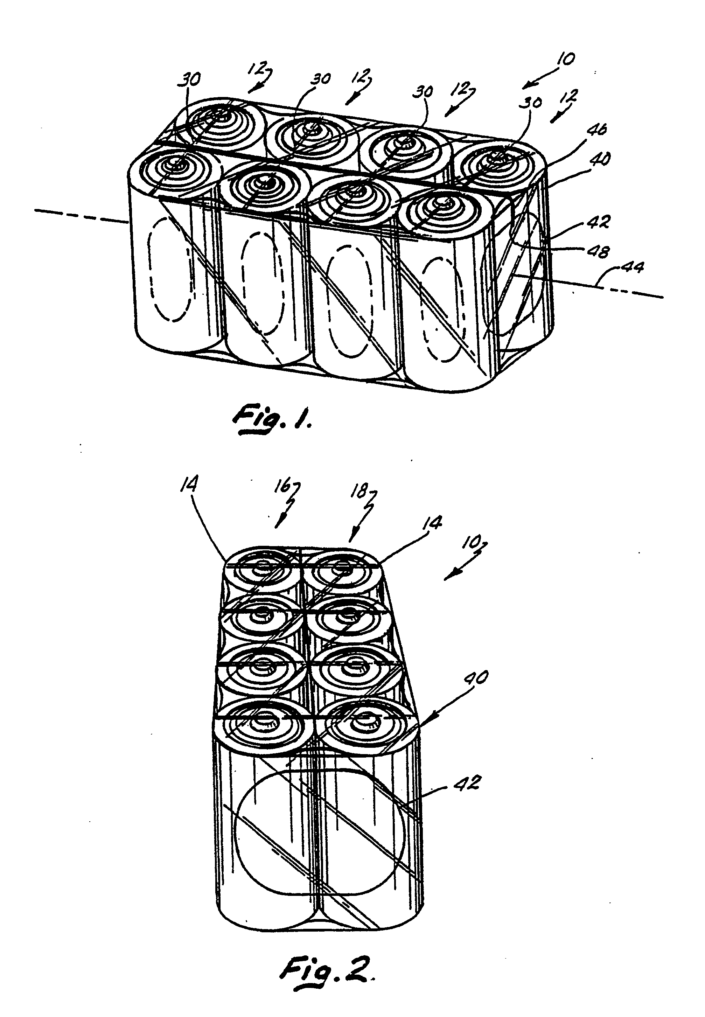

After formation of the individual sets 12, they are arranged in back-to-back relationship to form a generally rectangular grouping. In the package shown in Figs. 1 and 2, four individual sets 12 define an 8-pack of batteries. The group of batteries are inserted into a larger diameter outer tube or sleeve 40. Sleeve 40 has open ends 42 and a longitudinal axis or centre line 44 which extends along and between the two rows 16, 18 of the batteries. The centre line 44 of sleeve 40 is perpendicular to tear strips 30 and the longitudinal axes of the individual tubes or sleeves 20.

An elongated tear strip or tape 46 is secured to the undersurface of tube 40. Tape 46 includes an end 48 extending into an open end 42 of tube 40. Strip 46 extends along the top surface of the package between the rows 16, 18 and parallel to centre line 44. Heat is used to shrink plastic tube 40 around the individual sets of packages 12. A convenient and sturdy package is thereby provided.

Tear strips 30, 46 are designed to be pulled from one end of the package to the opposite end thereof. Tear strip 46 may be pulled only part way back along the centre line of the package thereby dispensing one of the individual battery sets 12 as shown in Fig. 3. Outer sleeve 40 will still securely retain the remaining individual sets 12.

## Claims

1. A pack of dry cell batteries, wherein the batteries are wrapped in shrink-wrap material, preferably covering the terminals, characterised in that the wrap further comprises a tear strip, the strip having an end accessible to a user and which, on pulling, is adapted to cause a tear in the wrap, allowing the batteries to be removed.

2. A pack according to claim 1, wherein the wrap material is heat shrinkable.

3. A pack according to Claim 2, wherein the heat shrinkable wrap is a PVC resin film.

4. A pack according to any preceding claim, wherein the wrap is in the form of a sleeve.

5. A pack according to claim 4, wherein the ends of the sleeve are shrunk so as to retain the batteries.

6. A pack according to any preceding claim, wherein the accessible end of the strip protrudes from an opening in the wrap.

7. A package comprising packs according to any preceding claim, the packs preferably spacially economically organised, such as back to back, wherein the packs are wrapped in a shrink-wrap material, preferably in an elongate form, and comprises a tear strip, preferably along an elongate axis, as defined in any preceding claim, said package optionally being further so packaged, successive layers preferably being so organised that sleeve axes are perpendicular.

8. A pack according to any preceding claim, wherein the wrap is weakened at, or near, the point at which the strip first will act when pulled.

9. A pack according to any preceding claim, comprising two or more tear strips.

10. A package for a plurality of generally dry cell batteries, the package comprising;
a heat shrinkable open ended sleeve dimensioned to receive the batteries in tandem, side-by-side relationship, the sleeve covering terminals of the batteries and shrink wrapping the batteries into a rigid package with portions of the battery labels showing through the open ends; and a tear strip affixed to an inner surface of the sleeve, the strip extending between ends of the sleeve with a portion extending into one of the open ends,
said package optionally further comprising any one or more suitable features as defined in any preceding claim, in any suitable combination.

Fig. 1.

Fig. 2.

Fig.3.

Fig.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 149 158 (MEYER MANUFACTURING CO.) * Page 2, lines 47-66; figures * | 1,2,4-6,8, 9,10 | B 65 D 71/14 |
| Y | | 3,7 | |
| Y | US-A-4 254 869 (R.J. HEIR) * Abstract; figures * | 7 | |
| A | | 1-5,10 | |
| Y | GB-A-2 184 672 (DAI NIPPON INSATSU KAISHA) * Page 1, lines 6-8; page 3, lines 1-6 * | 3 | |
| A | | 1,10 | |

**TECHNICAL FIELDS SEARCHED (Int. Cl.5)**

B 65 D

The present search report has been drawn up for all claims

| Place of search | Date of completion of search | Examiner |
|---|---|---|
| The Hague | 21 February 91 | ZANGHI A. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document